# EUROPEAN PATENT SPECIFICATION

(11) **EP 0 740 808 B1**
(45) Date of publication and mention of the grant of the patent: **20.10.1999**
(21) Application number: 95940190.2
(22) Date of filing: 15.11.1995
(51) Int. Cl.: G05D 23/13

(54) **A THERMOSTATIC MIXING VALVE**
THERMOSTATGEREGELTES MISCHVENTIL
MITIGEUR THERMOSTATIQUE

(30) Priority: 18.11.1994 IT TO940921
(43) Date of publication of application: 06.11.1996
(73) Proprietor: GEVIPI A.G., FL-9490 Vaduz (LI)
(72) Inventor: KNAPP, Francesco, I-27100 Pavia (IT)
(74) Representative: Patrito, Pier Franco, Dr. Ing.
(86) International application number: EP9504517
(87) International publication number: WO9616362

(56) References cited:
- EP-A- 0 187 378
- FR-A- 2 176 748
- FR-A- 2 569 814
- US-A- 3 955 759
- PATENT ABSTRACTS OF JAPAN vol. 007, no. 112 (M-215), 17 May 1983 & JP,A,58 034278 (TOUTOU KIKI KK), 28 February 1983,

## Description

The present invention has for its object a thermostatic mixing valve of the type used for supplying to hydraulic and sanitary appliances, from supply pipings of hot and cold water, water having a pre-established temperature, which possibly may be controlled within certain limits.

Some thermostatic valves of the type taken into account here are known, which comprise a body provided with inlet openings in an intake region for hot water, inlet openings in an intake region for cold water, an outlet opening for mixed water and, inside said body, a temperature sensitive member which, by acting against the action of a spring, causes the displacement of a slider which may travel between two shoulders located the one in the intake region for hot water and the other in the intake region for cold water, in order to throttle in a different and opposite way the inlet openings offered to the hot water and respectively to the cold water, which waters, inside the valve body, after having been mixed together, lap the temperature sensitive member. In this way, thanks to a suitable sizing of the different parts, it may be obtained that the hot water and the cold water, which enter the valve body and mix together therein, produce mixed water having the wanted temperature.

These valves have a heavy drawback, consisting in that the delay with which the valve intervenes for modifying the passage sections offered to the incoming water when the temperature of the mixed water changes, even if it is small, in some specific conditions may give rise to an over-control, and consequently to further regulations in the opposite sense, whereby oscillations of the valve take place.

Another drawback consists in that, at the start of the delivery, when the control action of the still cold temperature sensitive member has not yet started, the valve allows excessive intake of hot water and only a reduced intake of cold water, whereby mixed water having an excessively high temperature is delivered. This gives rise to very disagreable consequences, particularly when the valve controls the temperature of water forwarded to a shower. This drawback may also be repeated in the further operation, in case that casual sudden differences of pressure between the supply pipings take place.

One of the objects of this invention is to find a remedy, at least in a great measure, for these drawbacks, by embodying a valve having a reduced tendency to the oscillation, and which moreover, preferably, in the absence of a control delivers water at a moderate temperature, and intervenes more rapidly against the increases in temperature than against the reductions in temperature.

However, according to the document US-A-3,955,759 there is known a thermostatic valve which achieves the above stated objects. But the components of said valve are directly assembled into a faucet body, and this involves some disadvantages. Firstly, mounting the components into a faucet body, whose shape is unavoidably complicated, requires difficult and expensive operations, which cannot be done by means of automatic mounting equipments and require having recourse to specialized personnel. Then, when a component becomes damaged or used, its replacement involves dismounting all components of the valve and remounting the same with replacement components, thus giving rise to burdensome operation times and costs.

In view of the above, a more specific purpose of the invention is to attain the proposed objects without incurring the disadvantages of this known valve.

This object is attained, according to the invention, in a thermostatic mixing valve to be used for supplying to hydraulic and sanitary appliances, from supply pipings of hot and cold water, water having a pre-established temperature, which possibly may be controlled within certain limits, of the type comprising first inlet openings in an intake region for hot water, second inlet openings in an intake region for cold water, at least one outlet opening in an outlet region for mixed water, and a temperature sensitive member which, by acting against the action of a spring, causes the displacement of a slider which may travel between two shoulders located the one in the intake region for hot water and the other in the intake region for cold water, in order to throttle in a different and opposite way the inlet openings offered to the hot water and respectively to the cold water, which waters, inside the valve, after having been mixed together, lap the temperature sensitive member, the inlet openings located in the intake region for hot water having a passage section clearly different from the passage section of the inlet openings located in the intake region for cold water, characterized in that said first and second inlet openings for the hot water and the cold water, as well as the outlet opening for mixed water, are provided in a body of a simple, substantially cylindrical shape, in which all components of the valve are mounted, and which is suitable for being inserted into a manifold to which arrive the supply connections and which provides said supply and outlet regions.

Thanks to this feature, which makes the valve according to the invention different from most known valves, wherein said inlet openings have substantially equal passage sections, the slider assumes an asymmetric position and, when it is displaced, it acts with a proportionally different effect on the two incoming water flows. Due to the consequent asymmetry of the valve behaviour, the tendency to the oscillation of the valve is effectively opposed. On the other hand, in the case that some parts of the valve according to the invention become damaged or used, the valve may be taken out of the manifold wherein it is installed and replaced by another valve, through a simple and quick operation, after which the damaged valve may be disposed of or repaired in a workshop.

The ratio between the passage section of the larger inlet openings and the passage section of the smaller inlet openings is at least 1.5, preferably 2.5 and more preferably 3.5 or more.

Preferably, moreover, the inlet openings located in the intake region for hot water have a passage section clearly greater than the passage section of the inlet openings located in the intake region for cold water.

Thanks to this feature, the asymmetry in the valve behaviour consists in that, being equal the supply pressures and the temperature of the delivered water, the valve slider is compelled to locate more near the position in which it throttles the hot water passage, than it could happen in a known valve, in order to compensate for the throttling suffered by the cold water due to the lesser section of the corresponding passage openings. For this reason the valve is in the condition of responding to an increase in the delivered water temperature, more rapidly than to a reduction therein, when, for example, a sudden modification takes place in the pressure of the supply pipings. This is of advantage in that a temporary reduction in the temperature of the delivered water is less disagreable than a temporary increase in said temperature. Moreover, this advantageous condition is verified, in particular, at the delivery start, thus preventing the initial delivery of excessively hot water.

Preferably the valve includes means for modifying the rest position of the slider driven by the temperature sensitive member, and this allows regulating, within certain limits, the temperature of the delivered mixed water.

These and other features, objects and advantages of the present invention will appear more clearly from the following description of an embodiment, having the non-limitative character of an example, which is diagrammatically shown in the appended drawings, wherein:
Fig. 1 shows the cross section of a manifold intended to receive a thermostatic valve, with a valve according to the invention mounted therein and shown in external view;

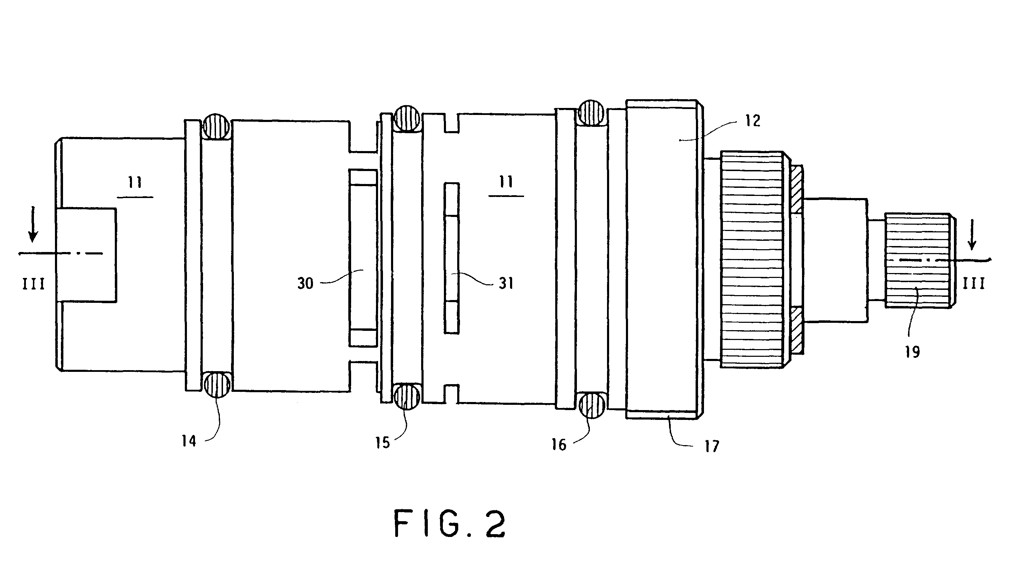

Fig. 2 shows in external view and on a larger scale the sole thermostatic valve of Figure 1; and

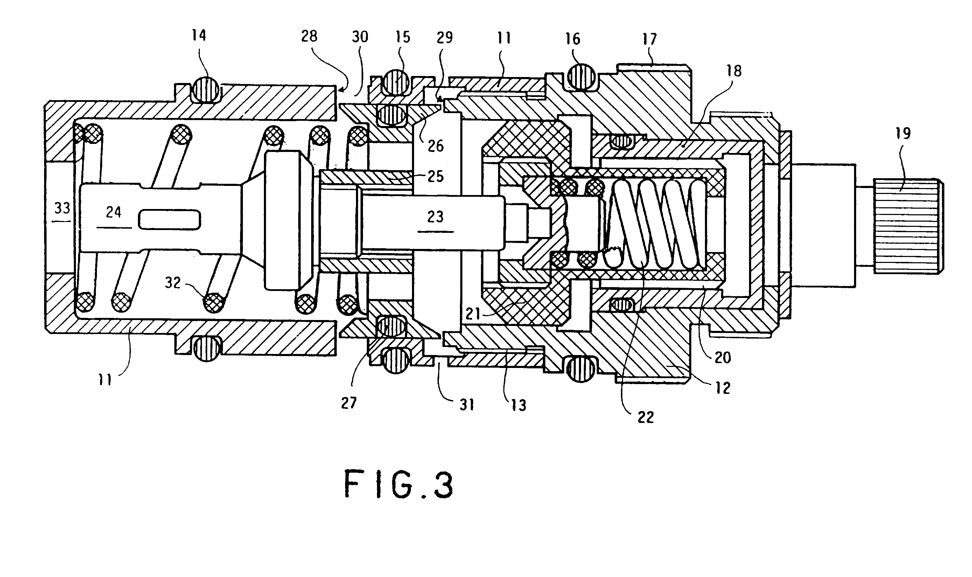

Fig. 3 shows a cross section thereof, taken along line III-III of Figure 2.

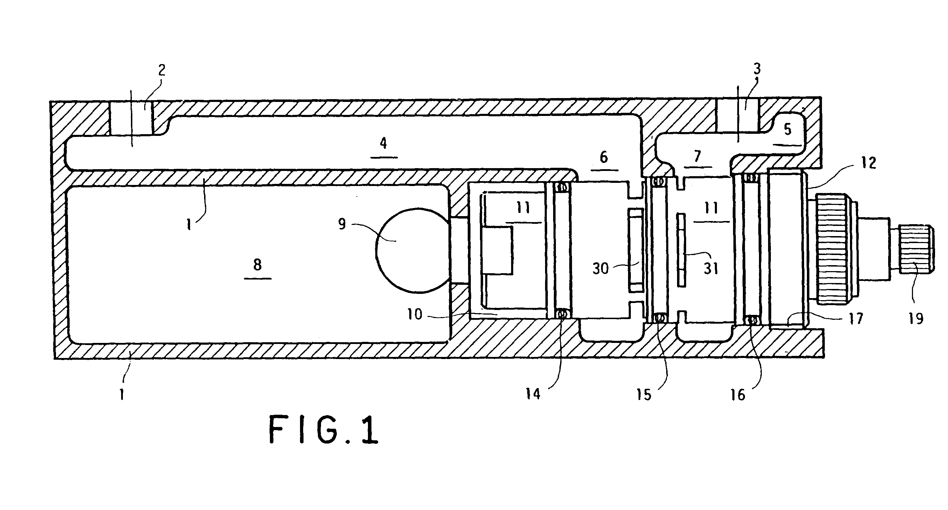

The manifold shown in Figure 1 comprises a bodv 1 wherein there is embodied an inlet connection 2 for hot water, communicating with a passage 4 ending in an annular chamber 6 which defines an intake region for hot water. Manifold 1 further comprises an inlet connection 3 for cold water, communicating with a passage 5 ending in an annular chamber 7 which defines an intake region for cold water. Moreover the manifold 1 has a chamber 8 from which starts a delivery connection for mixed water. Chamber 8 thus defines an outlet region for mixed water. Communicating with this chamber 8 there is a seat 10 suitable for receiving the installation of a thermostatic valve. The said hot water intake region 6 and cold water intake region 7 open in said seat 10 intended to receive the thermostatic valve.

This exemplary manifold is shown because its structure may aid in explaining the installation and the operation of the termostatic valve, but it should be understood that the manifold is not a part of this invention, that it has been shown only as a clarifying example, and that its structure could also be anyway different from the shown one.

The thermostatic valve comprises a body formed by two parts 11 and 12 mutually connected in any known way, for example by means of a threaded connection 13. The body part 11 is provided with seats for two ring packings 14 and 15 located in such a way that, when the valve is inserted in the corresponding manifold, they separate the hot water intake region 6 from the outlet region 8 and from the cold water intake region 7. In its turn, the body part 12 is provided with a seat for a ring packing 16 which, when the valve is inserted in the corresponding manifold, separates from the outer ambient the cold water intake region 7. Moreover, the body part 12 has any known means, such as for example a threading 17, for fixing the valve within the corresponding manifold.

In the body part 12 there is sealingly mounted, rotatable but not axially displaceable, a ring member 18 which protrudes outside the valve body in order to provide a coupling means 19 for a control handle (not shown). The ring member 18 is internally threaded at 20, and by means of this threading it is coupled with a piston 21, mounted within the body part 12 such as to be allowed to displace axially but not to rotate. This way, by operating from outside a rotation of the ring member 18, an axial displacement of the piston 21 is obtained. In this piston 21 there is housed a safety spring 22, against which rests a projection 23 of a temperature sensitive member 24. The shown sensitive member 24 if of a kind which is formed by a cylinder-piston assembly containing a special wax having a high thermal expansion coefficient. Such sensitive members are usually employed in the concerned applications; however it should be understood that also different kinds of sensitive members could be used in the valve according to the invention.

To the sensitive member 24 is connected, for example screwed, a tubular projection 25 of a slider 26, which is axially displaceable within the body part 11 wherein it seals by means of a ring packing 27. A spring 32 pushes the slider 26, and along with it the sensitive member 24, towards and against piston 21. Therefore, when the sensitive member 24 expands under the action of an increase in temperature, it displaces the slider 26 against the action of spring 32, by increasing its distance from the piston 21. The spring 22 aims to receive possible excessive forces applied to this system, thus preventing its detrerioration. The slider 26 cooperates, by means of its end portions, with a shoulder 28 located in the hot water intake region, as well as with a shoulder 29 located in the cold water intake region 29, whereby an axial displacement of the slider 26 causes opposite modifications of the passage sections offered, respectively, to the hot and cold water, between the slider 26 and the shoulders 28, respectively 29.

To said variable passage sections the water arrives through openings, which in this case have the shape of slits, formed in the valve body 11. More precisely, the hot water enters the valve through slits 30, and the cold water enters through slits 31. As it may be observed in the Figures, the passage sections of these slits 30 and 31 are very different, and more precisely, in this preferred embodiment, the slits 31 for cold water passage are very reduced with respect to the slits 30 for hot water passage. In the shown example, the ratio between the passage section of the slits 30 for hot water inlet and the passage section of the slits 31 for cold water inlet is more than 4. However, in some cases, the results aimed by the invention may be obtained even by more reduced ratios.

The operation of the valve is as follows. At rest, the slider 26 takes a position which depends from the regulation entered by means of the rotation of the ring member 19 and the corresponding axial displacement of the piston 21 and, along with it, of the sensitive member 24 and the slider 26. In any case, this position is operatively more close to the shoulder 29, because at rest the sensitive member still is cold and therefore it aims to offer the maximum passage to the hot water. However, because the cold water always suffers a throttle due to the more reduced passage section of the openings 31 with respect to the passage section of the openings 30, the position of the slider 26 should in any case be more close to the shoulder 28 than it should be in case the inlet openings were equal the one another, as according to the known art. Therefore, already at start of the operation, the delivery of excessively hot water is prevented. Thereafter, the stated asymmetry of the slider position, due to the different extension of the inlet openings, causes the valve to intervene more rapidly for correcting casual increases in temperature, than for correcting reductions in temperature, because the slider 26 is already relatively more close to the shoulder 28, with which it should cooperate in order to throttle the inlet of hot water.

It is important to observe that the stated asymmetry in the behaviour of the valve, due to the different width of the inlet apertures for hot and cold water, operates in the sense of highly attenuating any tendency of the valve to oscillate. Of course, in this connection, the same effect could be obtained by the different extension of the inlet openings, even if, contrary to what has been stated as preferred, the inlet openings for hot water have an extension substantially more reduced than the extension of the inlet openings for cold water. Therefore, when only the oscillations of the valve are to be prevented, and a protection against possible increases in temperature is not required, the invention may also be embodied in this latter form, opposite with respect to the described and shown example.

The device for controlling the temperature, comprising the ring member 18 and the piston 21, may be omitted when a control of the temperature of the delivered mixed water by the user is not required, or it may have the character of a regulation device, to be set initially and not provided with any control member offered to the user.

As already said, also other types of temperature sensitive members, different from the member 24, could be used, and moreover both the push spring 32 and the safety spring 22 could be located in a different manner.

## Claims

1. A thermostatic mixing valve to be used for supplying to hydraulic and sanitary appliances, from supply pipings of hot and cold water, water having a pre-established temperature, which possibly may be controlled within certain limits, of the type comprising first inlet openings (30) in an intake region (6) for hot water, second inlet openings (31) in an intake region (7) for cold water, at least one outlet opening (33) in an outlet region (8) for mixed water, and a temperature sensitive member (24) which, by acting against the action of a spring (32), causes the displacement of a slider (21) which may travel between two shoulders (28,29), located the one (28) in the intake region (6) for hot water and the other (29) in the intake region (7) for cold water, in order to throttle in a different and opposite way the inlet openings (30,31) offered to the hot water and respectively to the cold water, which waters, inside the valve, after having been mixed together, lap the temperature sensitive member (24), the inlet openings (30) located in the intake region (6) for hot water having a passage section clearly different from the passage section of the inlet openings (31) located in the intake region (7) for cold water , characterized in that the first (30) and second (31) inlet openings for the hot water and the cold water, as well as the outlet opening (33) for mixed water, are provided in a body (11,12) of a simple, substantially cylindrical shape, in which all components of the valve are mounted, and which is suitable for being inserted into a manifold (1) to which arrive the supply connections (2,4 and 3,5) and which provides said supply (6,7) and outlet (8) regions.

2. A thermostatic valve as set forth in Claim 1, characterized in that the ratio between the passage section of the larger inlet openings and the passage section of the smaller inlet openings is at least 1.5.

3. A thermostatic valve as set forth in Claim 1, characterized in that the ratio between the passage section of the larger inlet openings and the passage section of the smaller inlet openings is at least 2.5.

4. A thermostatic valve as set forth in Claim 1, characterized in that the ratio between the passage section of the larger inlet openings and the passage section of the smaller inlet openings is at least 3.5.

5. A thermostatic valve as set forth in Claim 1, characterized in that the inlet openings (30) located in the intake region (6) for hot water have a passage section clearly greater than the passage section of the inlet openings (31) located in the intake region (7) for cold water.

6. A thermostatic valve as set forth in Claim 1, characterized in that said inlet openings (30,31) are embodied in the form of slits formed in the valve body.

7. A thermostatic valve as set forth in Claim 1, characterized in that it includes means (18-21) for modifying the rest position of the slider (26) driven by the temperature sensitive member (24), thus allowing regulating, within certain limits, the temperature of the delivered mixed water.

8. A thermostatic valve as set forth in Claim 7, characterized in that said means (18-21) for modifying the position of the slider (26) include a ring member (18), rotatable but not axially displaceable with respect to the valve body (11,12), and a piston (21) screwed with respect to said ring member (18) and axially displaceable but not rotatable with respect to the valve body (11,12), said sensitive member (24) resting against said piston (21) under action of a pushing spring (32).

9. A thermostatic valve as set forth in Claim 8, characterized in that said ring member (18) protrudes outside the valve body (11,12) with means (19) for connecting a control handle.

10. A thermostatic valve as set forth in Claim 8, characterized in that said sensitive member (24) rests against said piston (21) with the interposition of a safety spring (22).

11. A thermostatic mixing valve characterized by the peculiarities, arrangements and operation, as they appear from the above specification and annexed drawings, or replaced by their technically equivalent means, taken in their whole, in their various combinations or separately.

## Patentansprüche

1. Thermostatisches Mischventil zur Versorgung von Hydraulik- und Sanitäranlagen mit Wasser bei einer vorgegebenen, innerhalb gewisser Grenzen eventuell einstellbaren Temperatur, und von Warm- und Kaltwasserzuleitungen ausgehend, vorgesehen, mit ersten Einlassöffnungen (30) in einem Warmwasser-Einlaufbereich (6), mit zweiten Einlassöffnungen (31) in einem Kaltwasser-Einlaufbereich (7), mit wenigstens einer Auslassöffnung (33) in einem Auslaufbereich (8) für das gemischte Wasser, und mit einem Temperaturfühler (24), der gegen die Kraft einer Feder (32) die Bewegung eines zwischen zwei Schultern (28,29) verschiebbaren Schiebers (21) auslöst, wobei sich die eine Schulter (28) im Warmwasser-Einlaufbereich (6) und die andere Schulter (29) im Kaltwasser-Einlaufbereich (7) befindet, um die für das Warmwasser bzw. das Kaltwasser zugänglichen Einlassöffnungen (30,31) in unterschiedlichem und entgegengesetztem Mass zu drosseln, wobei das sich nach der Mischung des Warmwasserstromes mit dem Kaltwasserstrom ergebende Wasser im Inneren des Ventilkörpers den Temperaturfühler (24) bespült, und die sich im Warmwasser-Einlaufbereich (6) befindenden Einlassöffnungen (30) einen Durchflussquerschnitt aufweisen. der sich vom Durchflussquerschnitt der sich im Kaltwasser-Einlaufbereich (7) befindenden Einlassöffnungen (31) deutlich unterscheidet, dadurch gekennzeichnet, dass sowohl die ersten (30) und die zweiten (31) Einlassöffnungen für das Warmwasser bzw. das Kaltwasser als auch die Auslassöffnungen (33) für das gemischte Wasser in einem Körper (11,12) ausgebildet sind. der einen einfachen Aufbau und im wesentlichen die Form eines Zylinders aufweist, in welchem sämtliche Bestandteile des Ventils eingebaut sind. und der geeignet ist, in ein Sammelrohr (1) eingesetzt zu werden, in welches die Zuleitungen (2,4 und 3,5) münden und das die Ein- und Auslaufbereiche (6,7 und 8) bildet.

2. Thermostatisches Mischventil nach Anspruch 1, dadurch gekennzeichnet, dass das Verhältnis zwischen dem Durchflussquerschnitt der breiteren Einlassöffnungen und dem Durchflussquerschnitt der engeren Einlassöffnungen wenigstens 1,5 beträgt.

3. Thermostatisches Mischventil nach Anspruch 1, dadurch gekennzeichnet, dass das Verhältnis zwischen dem Durchflussquerschnitt der breiteren Einlassöffnungen und dem Durchflussquerschnitt der engeren Einlassöffnungen wenigstens 2,5 beträgt.

4. Thermostatisches Mischventil nach Anspruch 1, dadurch gekennzeichnet, dass das Verhältnis zwischen dem Durchflussquerschnitt der breiteren Einlassöffnungen und dem Durchflussquerschnitt der engeren Einlassöffnungen wenigstens 3,5 beträgt.

5. Thermostatisches Mischventil nach Anspruch 1, dadurch gekennzeichnet, dass die sich im Warmwasser-Einlaufbereich (6) befindenden Einlassöffnungen (30) einen deutlich grösseren Durchflussquerschnitt aufweisen als die Durchflussquerschnitt der sich im Kaltwasser-Einlaufbereich (7) befindenden Einlassöffnungen (31).

6. Thermostatisches Mischventil nach Anspruch 1, dadurch gekennzeichnet, dass es sich bei den Einlassöffnungen (30,31) um im Ventilkörper ausgebildete Schlitze handelt.

7. Thermostatisches Mischventil nach Anspruch 1, dadurch gekennzeichnet, dass Mittel (18-21) zur Änderung der Ruhelage des durch den Temperaturfühler (24) gesteuerten Schiebers (26) vorgesehen sind, über welche die Temperatur des abgegebenen Mischwassers innerhalb gewisser Grenzen eingestellt werden kann.

8. Thermostatisches Mischventil nach Anspruch 7, dadurch gekennzeichnet, dass die Mittel (18-21) zur Änderung der Lage des Schiebers (26) aus einer Nutmutter (18), die zum Ventilkörper (11,12) drehbar aber nicht axial verschiebbar ist. und aus einem in der Nutmutter (18) eingeschraubten Kolben (21) bestehen, der zum Ventilkörper (11,12) axial verschiebbar, aber nicht drehbar ist, wobei der Temperaturfühler (24) von der Kraft einer Druckfeder (32) gegen den Kolben (21) zur Anlage gebracht wird.

9. Thermostatisches Mischventil nach Anspruch 8, dadurch gekennzeichnet, dass die Nutmutter (18) mit Mitteln (19) zur Verbindung eines Handgriffes aus dem Ventilkörper (11,12) herausragt.

10. Thermostatisches Mischventil nach Anspruch 8, dadurch gekennzeichnet, dass sich der Temperaturfühler (24) über eine zwischengelegte Sicherheitsfeder (22) am Kolben (21) abstützt.

11. Thermostatisches Mischventil, durch die Merkmale, die Anordnungen und die Arbeitsweise, die in der Beschreibung geschildert und in den beiliegenden Zeichnungen dargestellt sind, bzw. durch technisch gleichwertige Lösungen gekennzeichnet, die insgesamt, in verschiedenen Kombinationen oder einzeln zur Anwendung kommen.

## Revendications

1. Valve de mélange thermostatique destinée à être employée pour alimenter à des appareils hydrauliques et sanitaires, à partir de canalisations d'alimentation d'eau chaude et froide, de l'eau ayant une température préétablie, laquelle peut éventuellement être contrôlée dans certains limites, du type comprenant des premières ouvertures d'entrée (30) dans une région d'alimentation (6) pour l'eau chaude, des deuxièmes ouvertures d'entrée (31) dans une région d'alimentation (7) pour l'eau froide, d'au moins une ouverture de sortie (33) dans une région de sortie (8) pour l'eau mélangée, et d'un organe (24) sensible à la température lequel, en agissant contre l'action d'un ressort (32), provoque le déplacement d'un tiroir (26) qui peut mouvoir entre deux épaulements (28,29) disposés l'un (28) dans la région d'alimentation (6) pour l'eau chaude, l'autre (29) dans la région d'alimentation (7) pour l'eau froide, dans le but d'étrangler de manière différente et opposée les ouvertures d'entrée (30,31) disponibles pour l'eau chaude et respectivement pour l'eau froide, lesquelles, à l'intérieur de la valve, après avoir été mélangées l'une l'autre, lèchent l'organe (24) sensible à la température, les ouvertures d'entrée (30) disposées dans la région (6) d'alimentation pour l'eau chaude présentant une section de passage nettement différente de la section de passage des ouvertures d'entrée (31) disposées dans la région d'alimentation (7) pour l'eau froide. caractérisée en ce que lesdites premières et deuxièmes ouvertures d'entrée (30,31) pour l'eau chaude et pour l'eau froide et ladite ouverture de sortie (33) pour l'eau mélangée sont présentées par un corps (11,12) de forme simple, dans lequel sont montés tous les composants de la valve, et qui est susceptible d'être inséré dans un collecteur (1) auquel arrivent Is canalisations d'alimentation (2,4 et 3,5) et qui présente lesdites régions d'alimentation (6,7) et de sortie (8).

2. Valve thermostatique suivant la revendication 1, caractérisée en ce que le rapport entre la section de passage des ouvertures d'entrée plus grandes et la section de passage des ouvertures d'entrée plus petites est au moins de 1,5.

3. Valve thermostatique suivant la revendication 1, caractérisée en ce que le rapport entre la section de passage des ouvertures d'entrée plus grandes et la section de passage des ouvertures d'entrée plus petites est au moins de 2,5.

4. Valve thermostatique suivant la revendication 1, caractérisée en ce que le rapport entre la section de passage des ouvertures d'entrée plus grandes et la section de passage des ouvertures d'entrée plus petites est au moins de 3,5.

5. Valve thermostatique suivant la revendication 1, caractérisée en ce que les ouvertures d'entrée (30) disposées dans la région (6) d'alimentation pour l'eau chaude ont une section de passage nettement plus grande de la section de passage des ouvertures d'entrée (31) disposées dans la région (7) d'alimentation pour l'eau froide.

6. Valve thermostatique suivant la revendication 1, caractérisée en ce que lesdites ouvertures d'entrée (30,31) sont réalisées en forme de fentes pratiquées dans le corps de la valve.

7. Valve thermostatique suivant la revendication 1, caractérisée en ce qu'elle comprend des moyens (18-21) pour modifier la position de repos du tiroir (26) actionné par l'organe (24) sensible à la température, de la sorte permettant de régler, dans certains limites, la température de l'eau mélangée débitée.

8. Valve thermostatique suivant la revendication 7, caractérisée en ce que lesdits moyens (18-21) pour modifier la position du tiroir (26) comprennent une douille (18) qui peut tourner mais non se déplacer axialement par rapport au corps (11,12) de la valve, et un piston (21) vissé par rapport à ladite douille (18) et qui peut se déplacer axialement mais non tourner par rapport au corps (11,12) de la valve, ledit organe sensible (24) étant appuyé contre ledit piston (21) sous l'action d'un ressort de compression (32).

9. Valve thermostatique suivant la revendication 8, caractérisée en ce que ladite douille (18) fait saillie à l'extérieur du corps (11,12) de la valve avec des moyens (19) pour relier une poignée de manoeuvre.

10. Valve thermostatique suivant la revendication 8, caractérisée en ce que ledit organe sensible (24) est appuyé contre ledit piston (21) avec l'interposition d'un ressort de sûreté (22).

11. Valve thermostatique de mélange, caractérisée par les particularités, dispositions et fonctionnement, tels qu'ils ressortent de la description ci-dessus et des dessins annexés, ou bien remplacés par des moyens techniquement équivalents, pris dans leur ensemble, dans leurs différentes combinaisons ou séparément.
